# FASCICULE DE BREVET EUROPEEN

(11) **EP 1 040 148 B1**
(45) Date de publication et mention de la délivrance du brevet: **22.10.2003**
(21) Numéro de dépôt: 98962491.1
(22) Date de dépôt: 17.12.1998
(51) Int. Cl.: C08G 18/10, C09J 175/04

(54) **ADHESIF POLYURETHANE RETICULABLE PAR L'HUMIDITE POUR L'HYGIENE**
FEUCHTIGKEITSHÄRTENDER POLYURETHANKLEBSTOFF FÜR DIE HYGIENE
MOISTURE-SETTING POLYURETHANE ADHESIVE FOR HYGIENE ARTICLES

(30) Priorité: 19.12.1997 FR 9716203
(43) Date de publication de la demande: 04.10.2000
(73) Titulaire: Bostik Findley S.A., 92800 Puteaux (FR)
(72) Inventeur: MISKOVIC, Michel, F-60200 Compiègne (FR); BAUDUIN, François, F-60280 Margny-les-Compiègne (FR); BOUTTEFORT, Patrick, F-60280 Margny-les-Compiègne (FR); CHARTREL, Jean-François, F-60400 Cuts (FR)
(74) Mandataire: Ohresser, François
(86) Numéro de dépôt international: FR9802762
(87) Numéro de publication internationale: WO99032535

(56) Documents cités:
- EP-A- 0 383 505
- DE-A- 19 646 879
- CHEMICAL ABSTRACTS, vol. 116, no. 24, 15 juin 1992 Columbus, Ohio, US; abstract no. 237061x, XP002073145 & JP 04 008786 A (SUNSTAR ENGINEERING INC.) 13 janvier 1992
- DATABASE WPI Section Ch, Week 9538 Derwent Publications Ltd., London, GB; Class A95, AN 95-284038 XP002073046 & CA 2 122 942 A (KIMBERLY CLARK CORP) cité dans la demande

## Description

L'invention concerne un adhésif polyuréthane réticulable par l'humidité, utilisable notamment dans le domaine de l'hygiène.

Il est désormais habituel d'utiliser des systèmes de fixation du type VELCRO® pour confectionner des articles jetables relevant du domaine de l'hygiène, notamment des couches pour bébé ou adulte incontinent et des articles pour l'hygiène féminine. Il est bien connu que les systèmes du type précité comportent deux éléments : un premier élément constitué d'une multitude de fins crochets et un deuxième élément constitué d'une multitude de fines boucles. Par simple pression sur les éléments superposés, on fait pénétrer les crochets dans les boucles ce qui permet d'obtenir un assemblage solide. La liaison entre les deux éléments peut être rompue par l'application d'une force suffisante. Les deux éléments peuvent être assemblés et séparés à plusieurs reprises sans diminution notable de la tenue de l'assemblage.

Dans le cas particulier des couches jetables, ces systèmes de fixation sont disposés sur les parties arrière et frontale formant la ceinture de la couche lorsqu'elle est portée par l'utilisateur (voir US-A-5 176 670).

L'élément comportant les boucles est fixé sur la partie frontale de la couche, les boucles étant dirigées vers l'extérieur. Cet élément est généralement constitué d'un matériau de faible épaisseur, à base de fibres en polyoléfine ou d'autres fibres synthétiques, en particulier un tricotage (aussi appelé maille textile). L'élément se présente le plus souvent sous la forme d'une bande de dimension variable, éventuellement décorée de motifs, qui est collée sur l'enveloppe externe de la couche. Cette enveloppe peut consister en un film imperméable aux liquides, par exemple un film de polyéthylène ou de polypropylène, ou en un non-tissé imperméable aux liquides et perméable à la vapeur.

Le collage de l'élément comportant les boucles sur le matériau imperméable peut être réalisé au moyen d'adhésifs thermoplastiques du type des polyoléfines ou des uréthanes (voir CA-A-2 122 942) ou d'adhésifs polyuréthane réticulables par l'humidité.

Industriellement, le collage est effectué à une cadence élevée, c'est-à-dire à une vitesse pouvant excéder 150 mètres par minute. Les dispositifs de collage opèrent par enduction du matériau imperméable au moyen de l'adhésif liquide et contre-collage de l'élément comportant les boucles. L'assemblage ainsi formé subit ensuite un calandrage et un bobinage.

La quantité d'adhésif déposé doit être soigneusement contrôlée : trop faible, elle ne permet pas un collage satisfaisant et trop élevée, elle traverse les pores de l'élément contre-collé au risque de se répandre sur les boucles ce qui est préjudiciable à la fixation de l'élément comportant les crochets.

Il est avantageux économiquement de chercher à limiter la quantité d'adhésif tout en maintenant les performances du collage. A cet effet, la Demanderesse a cherché à déposer l'adhésif sur l'élément comportant les boucles.

Dans les conditions industrielles précitées, les adhésifs de l'art antérieur ont tendance très rapidement à ne plus adhérer sur l'élément ce qui entraîne la remontée de l'adhésif sur le dispositif dispensateur et l'arrêt de la chaîne production.

S'agissant des adhésifs à base de polyuréthanes réticulables par l'humidité, il s'impose la contrainte supplémentaire du taux de monomère isocyanate résiduel qui doit être aussi faible que possible pour des raisons évidentes de toxicité.

La Demanderesse a maintenant trouvé un nouvel adhésif qui permet de remédier à ces inconvénients.

L'invention se rapporte à un adhésif polyuréthane réticulable par l'humidité qui comprend :
a) 70 à 95 % en poids d'un prépolymère polyuréthane obtenu par polyaddition d'au moins un polyol avec au moins un diisocyanate trimérisé en isocyanurate et,
b) 5 à 30 % en poids d'une polyalphaoléfine essentiellement amorphe, la teneur en groupes NCO libres représentant 1 à 20 % en poids de l'adhésif.

De préférence, l'adhésif polyuréthane réticulable par l'humidité comprend :
a) 85 à 95 % en poids d'un prépolymère de polyuréthane obtenu par polyaddition d'au moins un polyol avec au moins un diisocyanate trimérisé en isocyanurate et,
b) 5 à 15 % en poids d'une polyoléfine essentiellement amorphe, la teneur en groupes NCO libres représentant 1 à 10 % en poids de l'adhésif.

Le polyol entrant dans la constitution du prépolymère est généralement choisis parmi les polyéthers polyols, les polyesters polyols et les polyols insaturés.

Les polyéthers polyols sont généralement choisis parmi les polyéthers polyols aliphatiques et aromatiques, et les mélanges de ces composés. De préférence, leur masse moléculaire moyenne est comprise entre 200 et 9000 et leur fonctionnalité hydroxyle est comprise entre 2 et 4,6.

A titre d'exemples de polyéthers polyols aliphatiques, on peut citer les dérivés oxyalkylés de diols tels que les polypropylène-glycols, ou de triols tels que le glycérol, le triméthylolpropane et l'hexane-1,2,6-triol, les polymères d'oxyde d'éthylène, de propylène ou de butylène, les copolymères d'oxyde d'éthylène et d'oxyde de propylène, les composés précités à terminaison silanyle et les dérivés oxyalkylés de diphényles tels que les dérivés oxyéthylénés ou oxypropylénés en position 4,4' du diphénytméthane.

De préférence, on utilise les dérivés oxypropylés du glycérol, les polymères d'oxyde de propylène ou de butylène et les copolymères d'oxyde d'éthylène et d'oxyde de propylène.

Les polyesters polyols sont généralement choisis parmi les polyesters polyols aliphatiques et aromatiques, et les mélanges de ces composés. De préférence, leur masse moléculaire moyenne est comprise entre 250 et 7000 et leur fonctionnalité hydroxyle est comprise entre 2 et 3.

A titre d'exemples, on peut citer les polyesters polyols résultant de la condensation de polyols aliphatiques, cycliques ou aromatiques tels que l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyldiméthanolamine et les mélanges de ces composés avec un acide tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone.

De préférence, on utilise les polyesters polyols résultant de la condensation de l'éthanediol, du 1,3-propanediol et/ou du 1,6-hexanediol avec l'acide adipique et/ou l'acide phtalique.

Les polyols insaturés sont généralement choisis parmi les polyols et les mélanges de polyols ayant de préférence une masse moléculaire comprise entre 1200 et 3000.

A titre d'exemples, on peut citer le polybutadiène et le polyisoprène à terminaisons hydroxylées.

De manière avantageuse, les polyols précités sont amorphes.

Les polyols précités peuvent également être utilisés en mélange avec d'autres composés hydroxylés.

On peut ainsi utiliser un monol ou un mélange de monols, en particulier les poly(éthylène/butylène)monols tels que le KRATON LIQUID™ L-1203 Polymer commercialisé par Shell, ou un polyol ou un mélange de polyols choisis parmi les poly(éthylène/butylène)diols tels que le KRATON LIQUID™ Polymer HPVM-2203 commercialisé par Shell, les copolymères de l'éthylène, de l'acétate de vinyle et de l'acrylate de 2-hydroxyéthyle tels que l'OREVAC® 9402 commercialisé par ELF ATOCHEM, les résines indène/coumarone modifiées par du phénol, par exemple NOVARES CA120 commercialisée par VFT, et les résines tackifiantes hydroxylées, par exemple REAGEM commercialisée par DRT.

Le monol et le polyol précités représentent respectivement 0 à 10 % et 0 à 25 % en poids des polyols.

Le diisocyanate trimérisé en isocyanurate dérive de diisocyanates choisis dans le groupe constitué du diphénylméthane-4, 4'-diisocyanate, diphénylméthane-2, 4'-diisocyanate et des produits d'hydrogénation des diisocyanates précités, toluylène-2,4-diisocyanate, toluylène-2,6-diisocyanate, hexaméthylènediisocyanate, isophoronediisocyanate et naphtylène-1,5-diisocyanate et leurs mélanges.

On préfère un hexaméthylènediisocyanate trimérisé ou un isophoronediisocyanate trimérisé.

De manière générale, le diisocyanate trimérisé en isocyanurate renferme moins de 0,2 % en poids de monomères isocyanate libres.

Le prépolymère polyuréthane est obtenu par polyaddition d'au moins un polyol et d'au moins un diisocyanate trimérisé en isocyanurate dans des quantités telles que la teneur en groupes isocyanates du prépolymère est comprise entre 1 et 25 %, et de préférence 2 et 15 % en poids.

La nature du prépolymère polyuréthane est susceptible d'influer sur la dureté de l'adhésif selon l'invention. A cet égard, on préfère les prépolymères polyuréthane obtenus par réaction :
- d'un mélange de polyols constitué :
   - de 20 à 100 % en poids d'un polyester polyol aliphatique,
   - et de 0 à 80 % en poids d'un polyester polyol aliphatico-aromatique
- et d'au moins un diisocyanate trimérisé en isocyanurate.

On préfère particulièrement les prépolymères polyuréthane obtenus par réaction :
- d'un mélange de polyols constitué :
   - de 30 à 50 % en poids d'un polyester polyol aliphatique,
   - et de 70 à 50 % en poids d'un polyester polyol aliphatico-aromatique
- et d'au moins un diisocyanate trimérisé en isocyanurate.

La polyalphaoléfine essentiellement amorphe (en anglais "amorphous polyalphaolefin" ou APAO) est généralement choisie parmi les polymères résultant de la copolymérisation de monomères choisis parmi l'éthylène, le propène, le 1-butène et le 1-hexène en présence d'un catalyseur de type Ziegler-Natta, et les mélanges de ces copolymères. A titre d'exemples, on peut citer le Vestoplast®, notamment référencé 508, commercialisé par HÜLS, l'Eastoflex® commercialisé par Eastman Chemical et le Rextac® commercialisé par Rexen. On préfère les copolymères ayant une masse moléculaire comprise entre 7300 et 23800 et une température de transition vitreuse comprise entre -27 et -36°C. De manière avantageuse, on utilise les copolymères ayant un point de ramollissement Bille et Anneau (Norme DIN 52011) compris entre 80 et 160°C.

Les adhésifs réticulables par l'humidité selon l'invention peuvent comprendre des additifs usuels connus de l'homme du métier tels que des charges, des agents tackifiants, des plastifiants, des promoteurs d'adhérence tels que des composés comportant des groupes silanyles et des catalyseurs qui accélèrent la réticulation par l'humidité, par exemple des catalyseurs métalliques tels que le dilaurate de dibutylétain ou des catalyseurs aminés tels que le dimorpholinodiéthyléther.

On peut préparer les adhésifs polyurethanes réticulables par l'humidité selon l'invention en faisant réagir les polyols et le cas échéant les autres composés hydroxylés, éventuellement déshydratés à haute température sous vide, avec les isocyanurates à l'abri de l'humidité et, le cas échéant sous gaz protecteur, à une température pouvant varier de 90 à 120°C. Après le démarrage de la réaction, on ajoute par mélange la polyalphaoléfine dans les rapports quantitatifs souhaités et on laisse la réaction se poursuivre jusqu'à ce que l'on obtienne la teneur souhaitée en NCO. A l'adhésif ainsi obtenu, on ajoute par mélange les éventuels additifs.

Les adhésifs polyuréthane réticulables par l'humidité selon l'invention sont particulièrement adaptés au collage industriel de mailles textiles, par exemple en cellulose, en polyamide ou en polytéréphtalate d'éthylène, et de films plastiques, par exemple en polyéthylène, en polypropylène ou en polytéréphtalate d'éthylène. Ce collage industriel est généralement mis en oeuvre à une cadence élevée, c'est-à-dire avec une vitesse de défilement de la maille pouvant excéder 150 mètres par minute, voire davantage.

Les adhésifs selon l'invention présentent en outre une teneur en monomère isocyanate libre inférieure à 0,15 % en poids de l'adhésif, une faible tension de vapeur à la température d'utilisation (100 à 130°C) et, par voie de conséquence, un caractère toxique limité, un excellent pouvoir piégeant (aptitude de l'adhésif à fixer un matériau) et une bonne élasticité après réticulation par l'humidité.

Les exemples qui suivent permettent d'illustrer l'invention.

### EXEMPLE 1

Dans un réacteur sous atmosphère d'azote, on introduit les composés suivants :
- 29,1 parties en poids d'isocyanurate d'hexaméthylènediisocyanate (teneur en NCO : 21,6 ± 0,3 % ; viscosité Brookfield : 3250 ± 750 mPa.s à 23°C ; hexaméthylènediisocyanate libre : < 0,2 % en poids ; désignation commerciale : Desmodur® N3300-BAYER),
- 21,95 parties en poids du produit de condensation d'acide adipique et d'un mélange de 2,2-diméthyl-1,3-propanediol, 1,2-éthanediol et 1,6-hexanediol (polyester polyol aliphatique ; indice d'hydroxyle : 18-24 ; masse moléculaire : 5000 ; fonctionnalité OH : 2 ; désignation commerciale : Dynacoll® 7250-HÜLS),
- 38,95 parties en poids du produit de condensation d'un mélange d'acide 1,3-benzènedicarboxylique et d'acide adipique et d'un mélange de 1,4-benzènedicarboxylate, 2,2-diméthyl-1,3-propanediol, 1,2-éthanediol et 3-hydroxy-2,2-diméthylpropyl-3-hydroxy-2,2-diméthylpropanoate (polyester polyol aliphatico-aromatique ; indice hydroxyle : 31-39 ; masse moléculaire : 3000 ; fonctionnalité OH : 2 ; désignation commerciale : Dynacoll® 7130-HÜLS).

Le mélange est porté à une température de l'ordre de 95 à 100°C. Lorsque la température est stable, on introduit dans le réacteur 10 parties en poids de copolymère d'éthylène, de 1-propène et de 1-butène (masse moléculaire : 11800 : température de transition vitreuse: -31°C ; viscosité à 190°C : 7800 mPa.s ; point de ramollissement Bille et Anneau (Norme DIN 52011) : 86°C ; dénomination commerciale : Vestoplast® 508-HÜLS).

Après achèvement de la réaction, on introduit 0,01 partie en poids de dilaurate de dibutylétain (DBTL). On récupère un adhésif blanc, solide à 23°C, ayant une teneur en NCO égale à 4,9 % mesurée selon la norme AFNOR T52-132.

A 130°C, l'adhésif est un liquide blanc qui présente un fort pouvoir collant et une viscosité Brookfield égale à 23000 mPa.s. En refroidissant, l'adhésif présente une forte élasticité.

Les propriétés mécaniques de l'adhésif obtenu sont définies par la résistance à la rupture et l'allongement à la rupture mesurées dans les conditions ci-après.

On coule l'adhésif fondu à 100°C sur du papier siliconé à l'aide d'un filmographe préchauffé à 100°C pour former un film de 25 cm de longueur, 9 cm de largeur et 300 µm d'épaisseur. Le film est soumis à une température de 23°C et une humidité relative de 50 % jusqu'à la polymérisation complète (de l'ordre de 4 semaines).

Après avoir retiré le papier siliconé, on découpe le film avec un emporte-pièce pour former des éprouvettes (type H2-Norme AFNOR T46002) que l'on tractionne avec une machine d'essai (Type DY 30 ; ADAMEL-LHOMARGY) à la vitesse constante de 100 mm/min. Les mesures sont effectuées sur 5 éprouvettes.
- Résistance à la rupture :: 20 ± 3 MPa
- Allongement à la rupture :: 110 ± 15 %

Les caractéristiques de collage de l'adhésif sont définies par la valeur du pelage mesurée dans les conditions suivantes :

### a- Préparation des éprouvettes

Dans un film souple de polyéthylène comportant des motifs décoratifs et une maille textile en polyamide (25 g/m²), on découpe des éprouvettes de 290 mm de long et 100 mm de large.

On fixe l'éprouvette de maille en polyamide sur du carton à l'aide d'agrafes (côté bouclettes en contact avec le carton) pour en faciliter la manipulation ultérieure.

### b- Evaluation du collage

Sur une plaque en verre posée sur une plaque chauffante à 130°C, on coule l'adhésif fondu (100°C). A l'aide d'un filmographe préchauffé à 130°C, on forme un film de 50 µm d'épaisseur (grammage : environ 5 g/m²), de 25 cm de longueur et 9 cm de large sur lequel on applique la maille textile. On exerce une légère pression sur le film et on retire l'assemblage de la plaque de verre que l'on applique sur l'éprouvette en polyéthylène, la face comportant les motifs étant en contact avec l'adhésif.

L'assemblage est mis sous presse dans une enceinte climatique à 23°C et 50 % d'humidité relative pendant 24 heures, puis on le retire de la presse et on laisse la polymérisation s'achever dans les conditions de température et d'humidité précitées (de l'ordre de 4 semaines).

On découpe l'assemblage en bandes de 25 mm de large, on retire le carton et on renforce la face extérieure en polyéthylène avec un ruban adhésif. Les bandes obtenues sont soumises à une traction en pelage 180° à la vitesse constante de 500 mm/min (machine d'essai Type DY 30 ; ADAMEL-LHOMARGY). Les mesures sont effectuées sur 5 bandes.

La résistance au pelage est égale à 5 N/25 mm.

On utilise l'adhésif pour réaliser industriellement le contre-collage d'un film de polyéthylène sur une maille textile en polyamide (20 g/m²). L'adhésif fondu à 110°C est déposé au moyen d'une buse à lèvre sur la maille textile qui défile à une vitesse supérieure à 150 mètres par minute.

On constate qu'il n'existe aucune remontée de l'adhésif sur la buse et que le mouillage de la maille par l'adhésif est satisfaisant. On observe aussi que l'adhésif ne traverse pas la maille textile.

### EXEMPLE 2 (Comparatif)

On procède dans les conditions de l'exemple 1 modifiées en ce que l'on utilise 30 parties en poids de Desmodur® N3300, 25 parties en poids de Dynacoll® 7250, 45 parties en poids de Dynacoll® 7130, 0,01 partie en poids de DBTL et en l'absence de Vestoplast® 508.

On récupère un adhésif blanc, solide à 23°C, ayant une teneur en NCO égale à 5,04 %.

A 130°C, l'adhésif est un liquide blanc, de viscosité Brookfield égale à 25800 mPa.s et qui ne présente pas de pouvoir collant. En refroidissant, l'adhésif présente une forte élasticité.

On observe une remontée du produit sur la buse et l'absence de mouillage de la maille textile par l'adhésif lorsque la vitesse de défilement de la maille textile est supérieure à 10 mètres par minute.

### EXEMPLE 3

Dans un réacteur sous atmosphère d'azote, on introduit les composés suivants :
- 25,7 parties en poids d'isocyanurate d'hexaméthylènediisocyanate (teneur en NCO : 21,6 ± 0,3 % ; viscosité Brookfield : 3250 ± 750 mPa.s à 23°C ; hexaméthylènediisocyanate libre : < 0,2 % en poids ; désignation commerciale : Desmodur® N3300-BAYER),
- 34,1 parties en poids du produit de condensation d'un mélange d'acide 1,3-benzènedicarboxylique et d'acide adipique et d'un mélange de 1,4-benzènedicarboxylate, 2,2-diméthyl-1,3-propanediol, 1,2-éthanediol et 3-hydroxy-2,2-diméthylpropyl-3-hydroxy-2,2-diméthylpropanoate (polyester polyol aliphatico-aromatique ; indice hydroxyle : 31-39 ; masse moléculaire: 3000 ; fonctionnalité OH : 2 ; désignation commerciale : Dynacoll® 7130-HÜLS),
- 34,1 parties en poids de copolymère d'oxyde d'éthylène et d'oxyde de propylène (polyéther polyol ; masse moléculaire : 3800 ; fonctionnalité OH : 2 ; désignation commerciale : Voranol® EP 1900-DOW CHEMICALS),
- 0,004 partie en poids de composé organo bismuthé (dénomination commerciale : Coscat® 83-CAMBREX COMPANY).

Le mélange est porté à une température de l'ordre de 85 à 90°C. Après 2 heures de réaction, on introduit dans le réacteur 6 parties en poids de copolymère d'éthylène, de 1-propène et de 1-butène (masse moléculaire : 11800 : température de transition vitreuse : -31°C ; viscosité à 190°C : 7800 mPa.s ; point de ramollissement Bille et Anneau (Norme DIN 52011) : 86°C ; dénomination commerciale : Vestoplast® 508-HÜLS).

Après achèvement de la réaction, on récupère un adhésif blanc, solide à 23°C, ayant une teneur en NCO égale à 3,9 % mesurée selon la norme AFNOR T52-132.

A 110°C, l'adhésif est un liquide blanc homogène qui présente un fort pouvoir collant et une viscosité Brookfield égale à 66000 mPa.s. En refroidissant, l'adhésif présente une forte élasticité.

On utilise l'adhésif pour réaliser industriellement le contre-collage d'un film de polyéthylène sur une maille textile en polyamide dans les conditions décrites à l'exemple 1.

On constate qu'il n'existe aucune remontée de l'adhésif sur la buse et que le mouillage de la maille par l'adhésif est excellent.

## Revendications

1. Adhésif polyuréthane réticulable par l'humidité, comprenant :
a) 70 à 95 % en poids d'un prépolymère polyuréthane obtenu par polyaddition d'au moins un polyol avec au moins un diisocyanate trimérisé en isocyanurate et,
b) 5 à 30 % en poids d'une polyalphaoléfine essentiellement amorphe, et dont la teneur en groupes NCO libres représente 1 à 20 % en poids de l'adhésif et la teneur en monomère isocyanate libre est inférieure à 0,15% en poids de l'adhésif.

2. Adhésif selon la revendication 1, comprenant :
a) 85 à 95 % en poids du prépolymère polyuréthane et,
b) 5 à 15 % en poids de la polyoléfine essentiellement amorphe,
et dont la teneur en groupes NCO libres représente 1 à 10 % en poids de l'adhésif.

3. Adhésif selon l'une des revendications 1 et 2, **caractérisé en ce que** la polyalphaoléfine est choisie parmi les polymères résultant de la copolymérisation de monomères choisis parmi l'éthylène, le propène, le 1-butène et le 1-hexène en présence d'un catalyseur de type Ziegler-Natta, et les mélanges de ces copolymères.

4. Adhésif selon la revendication 3 dans lequel la polyalphaoléfine a une masse moléculaire comprise entre 7300 et 23800 et une température de transition vitreuse comprise entre- 27 et - 36 °C.

5. Adhésif selon l'une des revendications 1 à 4, dans lequel le polyol est choisi parmi les polyéthers polyols, les polyesters polyols et les polyols insaturés.

6. Adhésif selon la revendication 5 dans lequel le polyol est choisi parmi les polyesters polyols ayant une masse moléculaire moyenne comprise entre 250 et 7000 et une fonctionnalité OH comprise entre 2 et 3.

7. Adhésif selon la revendication 6, dans lequel les polyesters polyols résultent de la condensation de polyols choisis parmi l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyldiméthanolamine et les mélanges de ces composés avec un acide tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone.

8. Adhésif selon la revendication 7, dans lequel les polyesters polyols résultent de la condensation de l'éthanediol, du 1,3-propanediol et/ou du 1,6-hexanediol avec l'acide adipique et/ou l'acide phtalique.

9. Adhésif selon l'une des revendications 1 à 8 dans lequel le diisocyanate trimérisé en isocyanurate dérive de diisocyanates choisis dans le groupe constitué par diphénylméthane-4, 4'- diisocyanate, diphénylméthane-2,4' diisocyanate et des produits d'hydrogénation des diisocyanates précités, toluylène-2,6 diisocyanate, hexaméthylènediisocyanate, isophosphorone diisocyanate et naphtylène-1,5-diisocyanate et leurs mélanges.

10. Adhésif selon la revendication 9 dans lequel le diisocyanate trimérisé en isocyanurate est l'hexaméthylènediisocyanate trimérisé ou isophosphorone diisocyanate trimérisé.

11. Adhésif selon l'une des revendications 1 à 10, dans lequel le prépolymère polyuréthane est obtenu par réaction :
- d'un mélange de polyols constitué :
• de 20 à 100 % en poids d'un polyester polyol aliphatique,
• et de 0 à 80 % en poids d'un polyester polyol aliphatico-aromatique et d'au moins un diisocyanate trimérisé en isocyanurate.

12. Adhésif selon l'une des revendications 1 à 11, dans lequel le prépolymère polyuréthane est obtenu par réaction :
- d'un mélange de polyols constitué :
• de 30 à 50 % en poids d'un polyester polyol aliphatique,
• et de 70 à 50 % en poids d'un polyester polyol aliphatico-aromatique et d'au moins un diisocyanate trimérisé en isocyanurate.

13. Procédé de collage d'un textile sur un film plastique consistant à déposer l'adhésif sur le textile dont la maille comporte une multitude de fines boucles, ledit adhésif étant un adhésif polyuréthane réticulable par l'humidité, comprenant :
a) 70 à 95 % en poids d'un prépolymère polyuréthane obtenu par polyaddition d'au moins un polyol avec au moins un polyisocyanate et,
b) 5 à 30 % en poids d'une polyalphaoléfine essentiellement amorphe, dont la teneur en groupes NCO libres représente 1 à 20 % en poids de l'adhésif.

14. Procédé de collage selon la revendication 13 dans lequel l'adhésif a une teneur en monomère isocyanate libre inférieure à 0,15% en poids.

15. Procédé selon l'une des revendications 13 et 14 dans lequel la maille textile est en cellulose, en polyamide ou en polytéréphtalate d'éthylène.

16. Procédé selon l'une des revendications 13 à 14, dans lequel le film plastique est un film en polyéthylène, polypropylène, ou en polytéréphtalate d'éthylène.

17. Procédé selon l'une des revendications 13 à 16 dans lequel l'adhésif est déposé au moyen d'une buse à lèvres.

18. Article destiné à l'hygiène contenant un élément de fixation sous forme d'une maille textile collée au moyen de l'adhésif selon l'une des revendications 1 à 12.

19. Article constitué d'un textile et d'un film plastique collés ensemble en mettant en oeuvre le procédé des revendications 13 à 17.

## Claims

1. Moisture-curable polyurethane adhesive, comprising:
a) 70% to 95% by weight of a polyurethane prepolymer obtained by polyaddition of at least one polyol with at least one diisocyanate trimerized to isocyanurate, and
b) 5% to 30% by weight of an essentially amorphous poly-α-olefin,
and in which the content of free NCO groups represents 1% to 20% by weight of the adhesive and the content of free isocyanate monomer is less than 0.15% by weight of the adhesive.

2. Adhesive according to Claim 1, comprising:
a) 85% to 95% by weight of the polyurethane prepolymer, and
b) 5% to 15% by weight of the essentially amorphous polyolefin,
and in which the content of free NCO groups represents 1% to 10% by weight of the adhesive.

3. Adhesive according to either of Claims 1 and 2, **characterized in that** the poly-α-olefin is chosen from polymers resulting from the copolymerization of monomers chosen from ethylene, propene, 1-butene and 1-hexene in the presence of a catalyst of Ziegler-Natta type, and blends of these copolymers.

4. Adhesive according to Claim 3, in which the poly-α-olefin has a molecular mass of between 7 300 and 23 800 and a glass transition temperature of between -27 and -36°C.

5. Adhesive according to one of Claims 1 to 4, in which the polyol is chosen from polyether polyols, polyester polyols and unsaturated polyols.

6. Adhesive according to Claim 5, in which the polyol is chosen from polyester polyols with an average molecular mass of between 250 and 7 000 and an OH functionality of between 2 and 3.

7. Adhesive according to Claim 6, in which the polyester polyols result from the condensation of polyols chosen from ethanediol, 1,2-propanediol, 1,3-propanediol, glycerol, trimethylolpropane, 1,6-hexanediol, 1,2,6-hexanetriol, butenediol, sucrose, glucose, sorbitol, pentaerythritol, mannitol, triethanolamine and N-methyldimethanolamine, and mixtures of these compounds, with an acid such as 1,6-hexanedioic acid, dodecanedioic acid, azelaic acid, sebacic acid, adipic acid, 1,18-octadecanedioic acid, phthalic acid and succinic acid and mixtures of these acids, an unsaturated anhydride such as maleic anhydride or phthalic anhydride, or a lactone such as caprolactone.

8. Adhesive according to Claim 7 in which the polyester polyols result from the condensation of ethanediol, 1,3-propanediol and/or 1,6-hexanediol with adipic acid and/or phthalic acid.

9. Adhesive according to one of Claims 1 to 8, in which the diisocyanate trimerized to isocyanurate is derived from diisocyanates chosen from the group consisting of 4,4'-diphenylmethane diisocyanate, 2,4'-diphenylmethane diisocyanate and products of hydrogenation of the abovementioned diisocyanates, 2,6-tolylene diisocyanate, hexamethylene diisocyanate, isophorone diisocyanate and 1,5-naphthylene diisocyanate, and mixtures thereof.

10. Adhesive according to Claim 9, in which the diisocyanate trimerized to isocyanurate is trimerized hexamethylene diisocyanate or trimerized isophorone diisocyanate.

11. Adhesive according to one of Claims 1 to 10, in which the polyurethane prepolymer is obtained by reaction:
- of a blend of polyols consisting of:
• 20% to 100% by weight of an aliphatic polyester polyol, and
• 0 to 80% by weight of an aliphatic-aromatic polyester polyol,
and of at least one diisocyanate trimerized to isocyanurate.

12. Adhesive according to one of Claims 1 to 11, in which the polyurethane prepolymer is obtained by reaction:
- of a blend of polyols consisting of:
• 30% to 50% by weight of an aliphatic polyester polyol, and
• 70% to 50% by weight of an aliphatic-aromatic polyester polyol,
and of at least one diisocyanate trimerized to isocyanurate.

13. Process for bonding a textile to a plastic film, which consists in applying the adhesive to the textile whose mesh comprises a plurality of fine loops, the said adhesive being a moisture-curable polyurethane adhesive, comprising
a) 70% to 95% by weight of a polyurethane prepolymer obtained by polyaddition of at least one polyol with at least one polyisocyanate, and
b) 5% to 30% by weight of an essentially amorphous poly-α-olefin,
in which the content of free NCO groups represents 1% to 20% by weight of the adhesive.

14. Bonding process according to Claim 13, in which the adhesive has a content of free isocyanate monomer of less than 0.15% by weight.

15. Process according to either of Claims 13 and 14, in which the textile mesh is made of cellulose, polyamide or polyethylene terephthalate.

16. Process according to either of Claims 13 and 14, in which the plastic film is a polyethylene, polypropylene or polyethylene terephthalate film.

17. Process according to one of Claims 13 to 16, in which the adhesive is applied using a lip nozzle.

18. Hygiene article containing an attachment member in the form of a textile mesh bonded by means of the adhesive according to one of Claims 1 to 12.

19. Article consisting of a textile and a plastic film bonded together using the process of Claims 13 to 17.

## Patentansprüche

1. Feuchtigkeitsvernetzender Polyurethan-Klebstoff, der:
a) 70 bis 95 Gew.-% eines durch Polyaddition mindestens eines Polyols an mindestens ein zu Isocyanurat trimerisiertes Diisocyanat erhaltenen Polyurethan-Prepolymers und
b) 5 bis 30 Gew.-% eines im wesentlichen amorphen Poly-alpha-olefins
enthält und einen Gehalt an freien NCO-Gruppen von 1 bis 20 Gew.-%, bezogen auf den Klebstoff, und einen Gehalt an freiem monomerem Isocyanat von weniger als 0,15 Gew.-%, bezogen auf den Klebstoff, aufweist.

2. Klebstoff nach Anspruch 1, der:
a) 85 bis 95 Gew.-% des Polyurethan-Prepolymers und
b) 5 bis 15 Gew.-% des im wesentlichen amorphen Poly-alpha-olefins
enthält und einen Gehalt an freien NCO-Gruppen von 1 bis 10 Gew.-%, bezogen auf den Klebstoff, aufweist.

3. Klebstoff nach Anspruch 1 oder 2, **dadurch gekennzeichnet, daß** das Poly-alpha-olefin unter Polymeren, die sich durch Copolymerisation von unter Ethylen, Propylen, 1-Buten und 1-Hexen ausgewählten Monomeren in Gegenwart eines Ziegler-Natta-Katalysators ergeben, und Gemischen dieser Copolymere ausgewählt ist.

4. Klebstoff nach Anspruch 3, bei dem das Poly-alpha-olefin eine Molekularmasse zwischen 7300 und 23.800 und eine Glasübergangstemperatur zwischen -27 und -36°C aufweist.

5. Klebstoff nach einem der Ansprüche 1 bis 4, bei dem das Polyol unter Polyetherpolyolen, Polyesterpolyolen und ungesättigten Polyolen ausgewählt ist.

6. Klebstoff nach Anspruch 5, bei dem das Polyol unter Polyesterpolyolen mit einem mittleren Molekulargewicht zwischen 250 und 7000 und einer OH-Funktionalität zwischen 2 und 3 ausgewählt ist.

7. Klebstoff nach Anspruch 6, bei dem sich die Polyesterpolyole aus der Kondensation von unter Ethandiol, 1,2-Propandiol, 1,3-Propandiol, Glycerin, Trimethylolpropan, 1,6-Hexandiol, 1,2,6-Hexantriol, Butendiol, Saccharose, Glucose, Sorbit, Pentaerythrit, Mannit, Triethanolamin, N-Methyldimethanolamin und Gemischen dieser Verbindungen ausgewählten Polyolen mit einer Säure, 1,6-Hexandisäure, Dodecandisäure, Azelainsäure, Sebacinsäure, Adipinsäure, 1,18-Octadecandisäure, Phthalsäure, Bernsteinsäure und Gemischen dieser Säuren, einem ungesättigten Anhydrid, wie Maleinsäure- oder Phthalsäureanhydrid, oder einem Lacton, wie Caprolacton, ergeben.

8. Klebstoff nach Anspruch 7, bei dem sich die Polyesterpolyole aus der Kondensation von Ethandiol, 1,3-Propandiol und/oder 1,6-Hexandiol mit Adipinsäure und/oder Phthalsäure ergeben.

9. Klebstoff nach einem der Ansprüche 1 bis 8, bei dem das zu Isocyanurat trimerisierte Diisocyanat aus der Gruppe bestehend aus Diphenylmethan-4,4'diisocyanat, Diphenylmethan-2,4'-diisocyanat und Hydrierungsprodukten davon, Toluylen-2,6-diisocyanat, Hexamethylendiisocyanat, Isophorondiisocyanat und Naphthylen-1,5-diisocyanat und Gemischen davon ausgewählt ist.

10. Klebstoff nach Anspruch 9, bei dem es sich bei dem zu Isocyanurat trimerisierten Diisocyanat um trimerisiertes Hexamethyldiisocyanat oder trimerisiertes Isophorondiisocyanat handelt.

11. Klebstoff nach einem der Ansprüche 1 bis 10, bei dem das Polyurethan-Prepolymer durch Umsetzung:
- eines Polyolgemischs aus:
• 20 bis 100 Gew.-% eines aliphatischen Polyesterpolyols
• 0 bis 80 Gew.-% eines aliphatischaromatischen Polyesterpolyols
mit mindestens einem zu Isocyanurat trimerisierten Diisocyanat
erhalten wird.

12. Klebstoff nach einem der Ansprüche 1 bis 11, bei dem das Polyurethan-Prepolymer durch Umsetzung:
- eines Polyolgemischs aus:
• 30 bis 50 Gew.-% eines aliphatischen Polyesterpolyols
• 70 bis 50 Gew.-% eines aliphatischaromatischen Polyesterpolyols
mit mindestens einem zu Isocyanurat trimerisierten Diisocyanat
erhalten wird.

13. Verfahren zum Kleben eines textilen Flächengebildes auf eine Kunststoffolie, bei dem man den Klebstoff auf ein textiles Flächengebilde mit einer Vielzahl von Schlaufen aufbringt und dabei als Klebstoff einen feuchtigkeitsvernetzenden Polyurethan-Klebstoff, der:
a) 70 bis 95 Gew.-% eines durch Polyaddition mindestens eines Polyols an mindestens ein Polyisocyanat erhaltenen Polyurethan-Prepolymers und
b) 5 bis 30 Gew.-% eines im wesentlichen amorphen Poly-alpha-olefins
enthält und einen Gehalt an freien NCO-Gruppen von 1 bis 20 Gew.-%, bezogen auf den Klebstoff, aufweist,
verwendet.

14. Klebeverfahren nach Anspruch 13, bei dem der Klebstoff einen Gehalt an freiem monomerem Isocyanat von weniger als 0,15 Gew.-% aufweist.

15. Verfahren nach Anspruch 13 oder 14, bei dem das textile Flächengebilde aus Cellulose, Polyamid oder Polyethylenterephthalat ist.

16. Verfahren nach Anspruch 13 oder 14, bei dem es sich bei der Kunststoffolie um eine Folie aus Polyethylen, Polypropylen oder Polyethylenterephthalat handelt.

17. Verfahren nach einem der Ansprüche 13 bis 16, bei dem man den Klebstoff mit einer Schlitzdüse aufbringt.

18. Hygieneartikel, enthaltend ein Befestigungselement in Form eines mit dem Klebstoff nach einem der Ansprüche 1 bis 12 geklebten textilen Flächengebildes.

19. Artikel aus einem textilen Flächengebilde und einer Kunststoffolie, die nach einem Verfahren nach einem der Ansprüche 13 bis 17 miteinander verklebt worden sind.
